# EUROPÄISCHE PATENTSCHRIFT

(11) **EP 1 768 870 B1**
(45) Veröffentlichungstag und Bekanntmachung des Hinweises auf die Patenterteilung: **24.02.2010**
(21) Anmeldenummer: 05750349.2
(22) Anmeldetag: 07.06.2005
(51) Int. Cl.: B60N 2/235

(54) **BESCHLAG FÜR EINEN FAHRZEUGSITZ**
FITTING FOR A VEHICLE SEAT
ARMATURE POUR SIEGE DE VEHICULE

(30) Priorität: 22.07.2004 DE 102004035599
(43) Veröffentlichungstag der Anmeldung: 04.04.2007
(73) Patentinhaber: KEIPER GmbH & Co. KG, 67657 Kaiserslautern (DE)
(72) Erfinder: THIEL, Peter, 42899 Remscheid (DE); PETERS, Christoph, 42929 Wermelskirchen (DE); PFEIFFER, Hans, 67727 Lohnsfeld (DE)
(74) Vertreter: Patentanwälte Hosenthien-Held und Dr. Held
(86) Internationale Anmeldenummer: PCT/EP2005/006087
(87) Internationale Veröffentlichungsnummer: WO 2006/010406

(56) Entgegenhaltungen:
- EP-A- 1 279 553
- DE-A1- 10 253 054
- US-A1- 2002 171 280

## Beschreibung

Die Erfindung betrifft einen Beschlag für einen Fahrzeugsitz, insbesondere einen Rastbeschlag für einen Kraftfahrzeugsitz, mit den Merkmalen des Oberbegriffs des Anspruches 1.

Aus der DE 102 53 054 A1 ist ein Beschlag mit ungeteilten Riegeln bekannt. Für die Beweglichkeit der beiden Riegel ist in deren Querrichtung ein gewisses Spiel vorhanden, welches beim verriegelten Beschlag zu einem Spiel des zweiten Beschlagteils und damit beispielsweise auch der Lehne führt. Damit dieses Spiel nicht durch zusätzliche Fertigungstoleranzen zu einer solchen Beweglichkeit der Lehne führt, dass sich merkliche Winkeländerungen und Geräusche ergeben, sind sehr geringe Fertigungstoleranzen erwünscht, was aber die Fertigungskosten erhöht.

Die US 2002/0171280 A1 und die EP 1 279 553 A1 offenbaren einen Beschlag der eingangs genannten Art. Die Riegel sind entlang einer Teilungslinie in zwei Teilbereiche geteilt, wodurch eine Stufe definiert ist.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, dass der mehrteilig ausgebildete Riegel, von dem vorzugsweise zwei Stück vorgesehen sind, entlang der wenigstens einen Teilungslinie in wenigstens zwei Segmente geteilt ist, kann durch eine kleine Relativbewegung in Querrichtung das vorhandene Spiel reduziert oder ganz beseitigt werden. Infolgedessen ist auch das Spiel des zweiten Beschlagteils und damit auch der am zweiten Beschlagteil angebrachten Sitzkomponente, vorzugsweise der Lehne, reduziert. Die Spielreduktion dient zur Vermeidung von Geräuschen. Die Freigängigkeit der Riegel in den Führungen kann etwas größer als bei dem bekannten Beschlag sein, was die Funktionssicherheit erhöht.

Die durch die Teilungslinie definierten Segmente des Riegels sind vorzugsweise radial unterschiedlich angeordnet, um die durch die Beweglichkeit in Querrichtung nicht die Gesamtbewegung des Riegels in Längsrichtung zu behindern. Das radial weiter außen gelegene Segment des Riegels ist ein Zahnsegment, welches die zum Zusammenwirken mit dem zweiten Beschlagteil vorgesehene Seite des Riegels trägt, d.h. in der Regel eine Verzahnung, die somit nicht unterteilt ist.

Radial weiter innen gelegen ist ein Drucksegment vorgesehen, von dem auch zwei vorhanden sein können, das zum Zusammenwirken mit dem Exzenter ausgebildet ist, beispielsweise durch die - vorzugsweise zwei - Drucknocken, an welchen der Exzenter den Riegel beaufschlagt, wobei jedes vorgesehene Drucksegment erfindungsgemäß wenigstens einen der Drucknocken aufweist, das Zahnsegment aber auch einen der Drucknocken aufweist.

Da das Zurückholen des Riegels beispielsweise durch eine Mitnehmerscheibe erfolgt, welche an einer Nase des Riegels angreift, um diesen radial nach innen zu ziehen, ist die Nase vorzugsweise ebenfalls am Zahnsegment vorgesehen, so dass die Funktionselemente des Riegels zum Verriegeln alle auf dem Zahnsegment lokalisiert sind. Das Zurückholen des Riegels kann - statt mit einer Mitnehmerscheibe - beispielsweise mittels des Exzenters und eines Hakens erfolgen, welcher vorzugsweise am Drucksegment vorgesehen ist.

Die Teilungslinie sollte wenigstens abschnittsweise mit konstanter Krümmung verlaufen, worunter auch ein linearer Verlauf fallen soll, um die gewünschte Beweglichkeit in Querrichtung zu ermöglichen. Für klare Kräfteverhältnisse verläuft die Teilungslinie wenigstens abschnittsweise vorzugsweise geradlinig, wobei dies in einem einzigen Abschnitt oder auch in zwei zueinander in einem Winkel stehenden Abschnitten erfolgen kann. In letzterem Fall kann es zur Schaffung eines Bewegungsfreiraums notwendig sein, dass einer der Abschnitte zu einem Spalt verbreitert ist, dessen in Querrichtung projizierte Breite mindestens so groß wie das zu verringernde Spiel ist.

Der erfindungsgemäße Beschlag kann als Einsteller, beispielsweise als Höheneinsteller oder Neigungseinsteller, bei allen Fahrzeugsitzen mit einstellbaren Baugruppen, beispielsweise mit neigungseinstellbarer Lehne oder höhen- und/oder neigungseinstellbarem Sitzteil, eingesetzt werden.

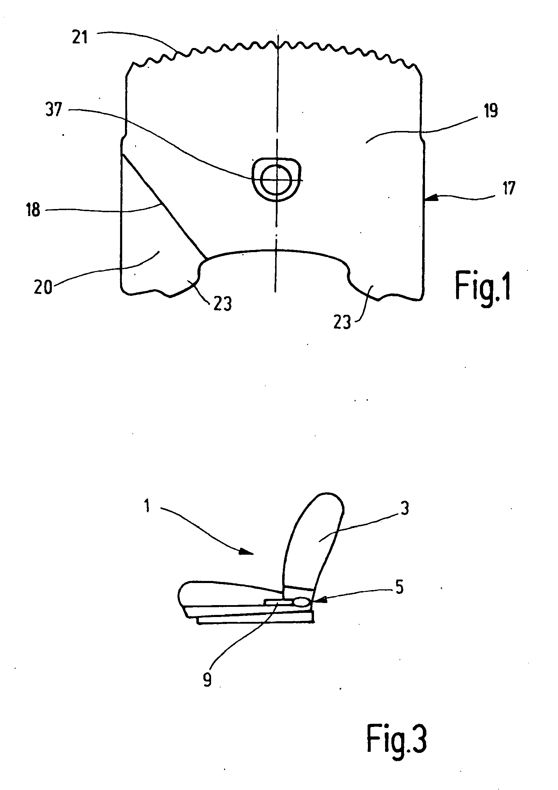

Im folgenden ist die Erfindung anhand eines in der Zeichnung dargestellten Ausführungsbeispiels näher erläutert. Es zeigen
- Fig. 1: eine Ansicht eines Riegels des Ausführungsbeispiels,

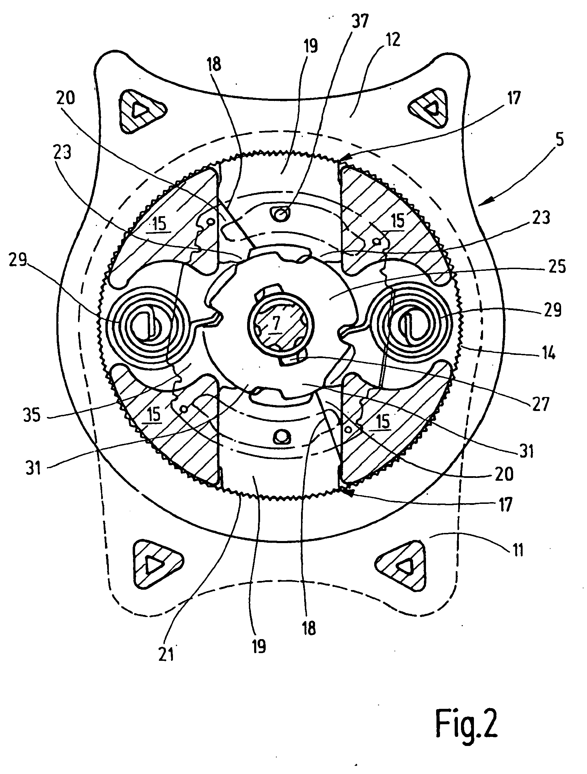

- Fig. 2: einen Schnitt durch das Ausführungsbeispiel, und
- Fig. 3: einen schematisierten Fahrzeugsitz.

Beim Ausführungsbeispiel weist ein Fahrzeugsitz 1 eines Kraftfahrzeuges für die Neigungseinstellung seiner Lehne 3 auf seinen beiden Seiten je einen Beschlag 5 auf, der als Rastbeschlag ausgebildet ist und, soweit nachfolgend nicht abweichend beschrieben, dem Beschlag aus der o.g. DE 102 53 054 A1 gleicht. Die beiden Beschläge 5 stehen mittels einer Übertragungsstange 7 miteinander in Getriebeverbindung. Ein drehfest auf der Übertragungsstange 7 sitzender Handhebel 9 dient der manuellen Betätigung der Beschläge 5. Die nachfolgenden Richtungsangaben des Beschlags 5 beziehen sich auf das durch die Übertragungsstange 7 definierte Zylinderkoordinatensystem.

Jeder Beschlag 5 weist ein erstes Beschlagteil 11 als Beschlagunterteil und ein zweites Beschlagteil 12 als Beschlagoberteil auf, welche durch nicht näher dargestellte Haltebleche in axialer Richtung zusammen gehalten werden. Das sitzteilfeste, erste Beschlagteil 11 ist mit vier Führungs- und Lagersegmenten 15 versehen, welche radial außen eine zylindrisch geformte, viermal unterbrochene Lagerfläche für eine entsprechend gekrümmte, radial nach innen weisende Lagerfläche des als Hohlrad ausgebildeten, lehnenfesten, zweiten Beschlagteils 12 bilden. Auf dieser Lagerfläche des zweiten Beschlagteils 12 ist außerdem eine Verzahnung 14 ausgebildet. Je zwei Führungs- und Lagersegmente 15 bilden zusammen eine radial verlaufende, durch parallele Führungsflächen definierte Führung für einen radial beweglich angeordneten Riegel 17, wobei diese Bewegungsrichtung des Riegels 17 seine Längsrichtung definiert. Die senkrecht zur Bewegungsrichtung des Riegels 17 und senkrecht zur axialen Richtung des Beschlags 5 verlaufende Richtung ist im folgenden als Querrichtung bezeichnet. Es sind insgesamt zwei, punktsymmetrisch zum Zentrum des Beschlags 5, d.h. zur Übertragungsstange 7, angeordnete Riegel 17 vorgesehen.

Erfindungsgemäß ist jeder der insgesamt zwei Riegel 17 entlang wenigstens einer Teilungslinie 18 geteilt, also mehrteilig ausgebildet, wobei jeder Riegel 17 bis auf die Teilung spiegelsymmetrisch zur Längsrichtung ausgebildet ist. Im ersten Ausführungsbeispiel ist eine einzige Teilungslinie 18 vorgesehen, welche von einer der in Längsrichtung verlaufenden Seiten des Riegels 17 schräg zu Längsrichtung und Querrichtung geradlinig hin zu der radial innen liegenden Seite des Riegels 17 verläuft.

Die Teilungslinie 18 trennt den Riegel 17 in ein Zahnsegment 19, das überwiegend radial weiter außen angeordnet ist und bis zu der radial außen liegenden Seite des Riegels 17 reicht, und in ein entlang der Teilungslinie 18 am Zahnsegment 19 anliegendes Drucksegment 20, das radial weiter innen angeordnet ist. Jedes Zahnsegment 19 trägt auf der konvex gekrümmten, radial weiter außen gelegenen Seite des Riegels 17 eine Vielzahl von Zähnen 21, welche mit der Verzahnung 14 des zweiten Beschlagteils 12 zusammenwirken können, um den Beschlag 5 zu verriegeln. Auf der radial innen gelegene Seite des Riegels 17 trägt das Zahnsegment 19 und das Drucksegment 20 je einen konvexen Drucknocken 23, wobei die beiden Drucknocken 23 voneinander beabstandet angeordnet sind.

Um die beiden Riegel 19 radial nach außen (in Sperrrichtung) zu drücken, ist ein scheibenförmiger Exzenter 25 vorgesehen, welcher mittels eines buchsenförmigen Mitnehmerelementes 27 auf der Übertragungsstange 7 sitzt. Während das Mitnehmerelement 27 drehfest auf der Übertragungsstange 7 sitzt, ist zwischen dem Exzenter 25 und dem Mitnehmerelement 27 ein Leerhub in Drehrichtung vorgesehen, welcher Torsionen der Übertragungsstange 7 und Stellungsunterschiede der beiden Beschläge 5 ausgleicht. Der Exzenter 25 ist durch zwei spiralförmige Federn 29 in eine Drehrichtung vorgespannt, und zwar in die Schließrichtung. Am Außenumfang des Exzenters 25 sind vier radial nach außen vorspringende Exzenternocken 31 mit je einer Spannfläche vorgesehen, welche bezüglich der Übertragungsstange 7 exzentrisch gekrümmt ist. In Umfangsrichtung zwischen den Exzenternocken 31 ist der Exzenter 25 soweit radial nach innen abgesetzt, dass die Drucknocken 23 Aufnahme finden können.

Eine Mitnehmerscheibe 35 sitzt drehfest auf dem Exzenter 25 und wirkt mit den Riegeln 17 zusammen, und zwar auf an sich bekannte Weise über Schlitz-Zapfen-Führungen, wofür jedes Zahnsegment 19 eine axial abstehende Nase 37 aufweist. Die Mitnehmerscheibe 35 dient dem Zurückholen der Riegel 19 in radialer Richtung nach innen, also der Entriegelung, welche durch eine Drehung der Übertragungsstange 7 mittels des Handhebels 9 eingeleitet wird.

Ausgehend von einem entriegelten Zustand, in welchem sich die beiden Zahnsegmente 17 radial innen befinden, wird durch die Vorspannung der Federn 29 der Exzenter 25 so gedreht, dass die Exzenternocken 31 zunächst in Anlage an die Drucknocken 23 gelangen und bei der weiteren Drehung über die Drucknocken 23 die doppelt abgestützten Riegel 17 nach außen drücken. Sobald die Zahnsegmente 19 in Eingriff mit dem zweiten Beschlagteil 12 gelangen, ist der jeweilige Beschlag 5 verriegelt. Ein für die Beweglichkeit der Riegel 17 erforderliches Spiel in Querrichtung des Riegels 17 wird nun wie folgt reduziert. Die auf die Drucknocken 23 übertragene, in Längsrichtung des Riegels 19 wirkende Kraft des Exzenters 25 hat eine Komponente entlang der Teilungslinie 18, welche auf der Seite des Drucksegments 20 eine Bewegung desselben entlang der Teilungslinie 18 bewirkt, wobei diese Bewegung aufgrund der Geometrie der Teilungsanordnung 18 eine Komponente in Querrichtung des Riegels 19 aufweist, mit welcher das besagte Spiel in Querrichtung reduziert oder ganz beseitigt wird.

### Bezugszeichenliste

- 1: Fahrzeugsitz
- 3: Lehne
- 5: Beschlag
- 7: Übertragungsstange
- 9: Handhebel
- 11: erstes Beschlagteil
- 12: zweites Beschlagteil
- 14: Verzahnung (des zweiten Beschlagteils)
- 15: Führungs- und Lagersegment
- 17: Riegel
- 18: Teilungslinie
- 19: Zahnsegment
- 20: Drucksegment
- 21: Zahn (des Zahnsegments)
- 23: Drucknocken
- 25: Exzenter
- 27: Mitnehmerelement
- 29: Feder
- 31: Exzenternocken
- 35: Mitnehmerscheibe
- 37: Nase

## Patentansprüche

1. Beschlag für einen Fahrzeugsitz, insbesondere Rastbeschlag für einen Kraftfahrzeugsitz, mit
a) einem ersten Beschlagteil (11),
b) einem relativ zum ersten Beschlagteil (11) verdrehbaren und verriegelbaren zweiten Beschlagteil (12),
c) wenigstens einem Riegel (17), der mit seiner Längsrichtung in radialer Richtung ausgerichtet ist, in welcher er beweglich zwischen Führungssegmenten (15) des ersten Beschlagteils (11) mit Spiel in Querrichtung geführt ist, und der mit seiner radial außen gelegenen Seite mit dem zweiten Beschlagteil (12) zum Verriegeln zusammenwirkt, wobei der Riegel (17) entlang wenigstens einer Teilungslinie (18) geteilt ist, und
d) einem Exzenter (25), der zum Verriegeln den Riegel (17) an dessen radial innen gelegener Seite beaufschlagt und radial nach außen bewegt,
**dadurch gekennzeichnet, dass**
e) der Riegel (17) mehrteilig ausgebildet und entlang der wenigstens einen Teilungslinie (18) in wenigstens zwei Segmente (19, 20) geteilt ist, wobei die wenigstens eine Teilungslinie (18) ein Zahnsegment (19) des Riegels (17), an welchem die zum Zusammenwirken mit dem zweiten Beschlagteil (12) vorgesehene Seite des Riegels (17) vorgesehen ist, und wenigstens ein Drucksegment (20) des Riegels (17) definiert, welches vom Exzenter (25) beaufschlagt ist, wobei die wenigstens eine Teilungslinie (18) wenigstens abschnittsweise schräg zur Längsrichtung und Querrichtung des Riegels (17) verläuft, so dass die Kraft des Exzenters (25) eine Relativbewegung der Segmente (19, 20) mit einer Komponente in Querrichtung bewirkt, welche das besagte Spiel in Querrichtung reduziert oder ganz beseitigt, und
f) bei verriegeltem Beschlag (5) der Exzenter (25) den Riegel (17) an Drucknocken (23) beaufschlagt, wobei jedes vorgesehene Drucksegment (20) wenigstens einen der Drucknocken (23) und das Zahnsegment (19) einen Drucknocken (23) aufweist.

2. Beschlag nach Anspruch 1, **dadurch gekennzeichnet, dass** eine Mitnehmerscheibe (35) den Riegel (17) zum Entriegeln radial nach innen zieht, wobei die Mitnehmerscheibe (35) mit einer Nase (37) des Zahnsegments (19) zusammenwirkt.

3. Beschlag nach einem der vorhergehenden Ansprüche, **dadurch gekennzeichnet, dass** die wenigstens eine Teilungslinie (18) wenigstens abschnittsweise geradlinig verläuft.

4. Beschlag nach einem der vorhergehenden Ansprüche, **dadurch gekennzeichnet, dass** zwei Riegel (17) vorgesehen sind.

5. Fahrzeugsitz (1) mit einer Lehne (3), **gekennzeichnet durch** einen Beschlag (5) nach einem der vorhergehenden Ansprüche zur Neigungseinstellung der Lehne (3).

## Claims

1. A fitting for a vehicle seat, in particular a detent fitting for a motor vehicle seat, having
a) a first fitting part (11),
b) a second fitting part (12) being rotatable and lockable relative to the first fitting part (11),
c) at least one locking element (17) the longitudinal direction of which is oriented in the radial direction in which it is movably guided with play in the transverse direction between guiding segments (15) of the first fitting part (11), and which cooperates with its radially outward located side together with the second fitting part (12) to accomplish the locking process, wherein the locking element (17) is divided along at least one dividing line (18), and
d) an eccentric (25) which in order to perform the locking process bears against the radially inner-located side of the locking element (17) moving the latter radially outwards,
**characterized in that**
e) the locking element (17) is formed in several parts and is separated along at least one dividing line (18) into at least two segments (19, 20), wherein the dividing line (18) defines a toothed segment (19) of the locking element (17), on which the side of the locking element (17) intended to cooperate with the second fitting part (12) is provided, and at least one pressure segment (20) of the locking element (17) against which segment the eccentric (25) bears, wherein at least sectionally the dividing line (18) runs obliquely to the longitudinal and transverse directions of the locking element (17), thus the force of the eccentric (25) causes a relative movement of the segments (19, 20) with a component in the transverse direction, by means of which said play is reduced or totally eliminated in the transverse direction, and,
f) when the fitting (5) is locked, the eccentric (25) bears against the locking element (17) at pressure cams (23), each pressure segment (20) provided possessing at least one of the pressure cams (23), and the toothed segment (19) possesses a pressure cam (23).

2. A fitting according to Claim 1, **characterized in that** a driving plate (35) pulls the locking element (17) radially inwards to unlock it, the driving plate (35) cooperating with a lug (37) of the toothed segment (19).

3. A fitting according to any of the preceding Claims, **characterized in that** at least sectionally the dividing line (18) runs in a straight line.

4. A fitting according to any of the preceding Claims, **characterized in that** two locking elements (17) are provided.

5. A vehicle seat (1) having a backrest (3) **characterized by** a fitting (5) according to any of the preceding Claims for adjusting the inclination of the backrest (3).

## Revendications

1. Armature pour un siège de véhicule, en particulier armature d'encliquetage pour un siège de véhicule automobile, avec
a) une première partie d'armature (11) ;
b) une deuxième partie d'armature (12) pouvant pivoter et être verrouillée par rapport à la première partie d'armature (11) ;
c) au moins un verrou (17) qui est orienté avec sa direction longitudinale dans la direction radiale dans laquelle il est guidé de façon mobile, avec du jeu dans la direction transversale, entre des segments de guidage (15) de la première partie d'armature (11) et qui, par son côté situé radialement vers l'extérieur, coopère avec la deuxième partie d'armature (12) pour le verrouillage, le verrou (17) étant partagé selon au moins une ligne de partage (18) ; et
d) un excentrique (25) qui, pour le verrouillage du verrou (17), est sollicité sur son côté situé radialement vers l'intérieur et est déplacé radialement vers l'extérieur ;
**caractérisé par le fait que** :
e) le verrou (17) est fait de plusieurs parties et est partagé selon ladite au moins une ligne de partage (18) en au moins deux segments (19, 20), ladite au moins une ligne de partage (18) définissant un segment denté (19) du verrou (17), sur lequel est implanté le côté du verrou (17) destiné à coopérer avec la deuxième partie d'armature (12), et au moins un segment de pression (20) du verrou (17), lequel est sollicité par l'excentrique (25), la au moins une ligne de partage (18) étant orientée au moins par segments en biais par rapport à la direction longitudinale et à la direction transversale du verrou (17), de telle sorte que la force de l'excentrique (15) commande un mouvement relatif des segments (19, 20) avec une composante dans la direction transversale, laquelle réduit ou élimine entièrement ledit jeu dans la direction transversale ; et
f) lorsque l'armature (5) est verrouillée, l'excentrique (25) sollicite le verrou (17) au niveau de la came de pression (23), chacun des segments de pression (20) prévus présentant au moins l'une des cames de pression (23) et le segment denté (19) présentant une came de pression (23).

2. Armature selon la revendication 1, **caractérisée par le fait que**, pour le déverrouillage, un disque d'entraînement (35) tire le verrou (17) radialement vers l'intérieur, le disque d'entraînement (35) coopérant avec un mentonnet (37) du segment denté (19).

3. Armature selon l'une des revendications précédentes, **caractérisée par le fait que** ladite au moins une ligne de partage (18) est rectiligne sur au moins certains segments.

4. Armature selon l'une des revendications précédentes, **caractérisée par le fait qu'**il est prévu deux verrous (17).

5. Siège de véhicule (1) avec un dossier (3), **caractérisé par** une armature (5) selon l'une des revendications précédentes, pour le réglage de l'inclinaison du dossier (3).
